# FASCICULE DE BREVET EUROPEEN

(11) **EP 0 870 647 B1**
(45) Date de publication et mention de la délivrance du brevet: **19.11.2003**
(21) Numéro de dépôt: 98106458.7
(22) Date de dépôt: 08.04.1998
(51) Int. Cl.: B60R 1/06

(54) **Sélecteur de réglage des rétroviseurs d'un véhicule automobile**
Wählschalter für Fahrzeug-rückblickspiegel
Selector switch for vehicle rear-view mirrors

(30) Priorité: 10.04.1997 FR 9704523
(43) Date de publication de la demande: 14.10.1998
(73) Titulaire: VALEO ELECTRONIQUE, 94042 Creteil Cédex (FR)
(72) Inventeur: Chiattelli, Claudio, 93150 Le Blanc-Mesnil (FR); Lhernault, Alain, 77144 Chalifert (FR)
(74) Mandataire: de la Bigne, Guillaume Michel Marie

(56) Documents cités:
- EP-A- 0 400 633
- DE-A- 3 524 439

## Description

La présente invention concerne les commandes de réglage des rétroviseurs d'un véhicule automobile et se rapporte plus particulièrement aux sélecteurs, que comportent de telles commandes.

Ainsi qu'on le sait une telle commande comporte un sélecteur relié par un faisceau de fils à la borne positive et négative de la source de tension du véhicule (la batterie de celui-ci) et à des moteurs électriques (deux par rétroviseur).

En outre pour certains véhicules, on peut escamoter (rabattre) les rétroviseurs pour cacher ceux-ci.

Le sélecteur comporte une manette de commande manoeuvrable par le conducteur et pilotant en rotation deux premiers curseurs coopérant avec des premières pistes électriques pour sélectionner le rétroviseur à régler.

La manette peut donc par rotation prendre trois positions à savoir une première position de repos, pour laquelle les rétroviseurs ne sont pas actionnés, une deuxième position pour commander uniquement le réglage du rétroviseur droit (côté passager) et une troisième position pour commander uniquement le réglage du rétroviseur gauche (côté conducteur). Une quatrième position peut être prévue pour escamoter les rétroviseurs.

Les premières pistes électriques appartiennent donc à un premier réseau de pistes électriques comportant une piste de contact permanent et des pistes de sélection.

La manette peut effectuer également des mouvements de basculement suivant deux plans perpendiculaires de part et d'autre de la position de repos de la manette.

Dans un premier plan la manette est manoeuvrée horizontalement vers la gauche ou vers la droite entre deux positions extrêmes pour ouvrir ou fermer le champ de vision.

Dans un deuxième plan la manette est manoeuvrée verticalement vers le haut ou vers le bas entre deux positions extrêmes pour rehausser ou rabattre le champ de vision.

Ceci est réalisé également à l'aide de trois deuxièmes curseurs coopérant avec des deuxièmes pistes électriques. Ces deuxièmes pistes électriques appartiennent à un deuxième réseau de pistes électriques comprenant des pistes de commande des moteurs électriques pilotant le réglage des rétroviseurs et des pistes d'alimentation électriques reliées respectivement aux bornes négative et positive de la source de tension (la batterie) du véhicule automobile: En pratique le deuxième réseau comporte trois ensembles de trois pistes pour coopérer chacun avec un curseur.

Au total il faut donc sept sorties et donc un faisceau à sept fils, ainsi que cinq curseurs pour réaliser la commande de réglage des rétroviseurs.

Dans le cas où le rétroviseur s'escamote, il faut un fil de plus pour réaliser la fonction.

DE 35 24 439 A décrit un sélecteur de réglage de deux rétroviseurs d'un véhicule automobile.

EP 0 400 633 A décrit, conformément au préambule de la revendiation 1, un sélecteur de réglage de rétroviseur de véhicule automobile destiné à régler des premier et second rétroviseurs auxquels sont associés respectivement des première et seconde paires de moteurs électriques de réglage de rétroviseurs, du type comprenant des moyens de sélection d'une paire de moteurs destinés à être alimentés électriquement, dite paire sélectionnée de premier et second moteurs de réglage, et des premier et second curseurs conducteurs mobiles destinés à coopérer avec un premier réseau de pistes conductrices pour établir des circuits d'alimentation électrique de la paire sélectionnée de moteurs,
chaque moteur de réglage étant muni de première et seconde bornes d'alimentation électrique destinées à être portées respectivement à des polarités opposées,
le premier curseur étant destiné à raccorder sélectivement deux pistes d'alimentation électrique, destinées à être portées respectivement à des polarités opposées, avec une piste de distribution , destinée à être raccordée à la première borne de chaque moteur de réglage,
le second curseur étant destiné à raccordé deux pistes d'alimentation électrique, destinées à être portées respectivement à des polarités opposées, à des première et seconde pistes de commande sélectivement, destinées à être raccordées à la seconde borne d'alimentation des premier et second moteurs de réglage respectivement,
les deux curseurs étant couplés entre eux de façon à être déplaçables conjointement entre une position de repos et au moins une position active d'alimentation électrique d'au moins un moteur de réglage dans laquelle le premier curseur est en contact avec la piste de distribution , le second curseur est en contact avec l'une des pistes de commande, et les deux curseurs sont en contact respectivement avec des pistes d'alimentation électrique de polarités opposées.

La présente invention a pour but, de manière simple et économique, de diminuer le nombre de fils du faisceau, ainsi que le nombre de contacts et de curseurs.

A cet effet, l'invention a pour objet un sélecteur de réglage de rétroviseur de véhicule automobile destiné à régler des premier et second rétroviseurs auxquels sont associés respectivement des première et seconde paires de moteurs électriques de réglage de rétroviseurs, du type précité, **caractérisé en ce que** les moyens de sélection comprennent des troisièmes curseurs destinés à coopérer avec un second réseau de pistes conductrices pour relier électriquement la piste de distribution , à la première borne de chaque moteur de réglage de la paire sélectionnée.

Ainsi, dans le cadre de l'invention, un sélecteur de réglage des rétroviseurs d'un véhicule automobile peut comporter, d'une part, un premier chariot portant des curseurs propres à coopérer avec une piste de contact permanent et sélectivement avec des pistes de sélection pour sélectionner le rétroviseur à régler, et, d'autre part, un deuxième chariot portant des curseurs propres à coopérer avec des pistes de commande pour régler le rétroviseur sélectionné. Les pistes de commande, les pistes de sélection et la piste de contact permanent sont alimentées par l'intermédiaire d'une piste centrale destinée à être reliée à la borne positive de la source de tension du véhicule et deux pistes, dites respectivement première et deuxième pistes négatives, reliées entre elles et destinées à être reliées à la borne négative de la source de tension du véhicule. La piste centrale est intercalée horizontalement entre les pistes négatives et comporte quatre plages de contact étagées, tandis que les pistes négatives comportent deux plages de contact étagées. Le deuxième chariot porte deux curseurs pour établir des contacts, d'une part, entre la piste de contact permanent et la première piste négative ou la piste centrale, et, d'autre part, entre l'une des pistes de commande et l'une des pistes centrale - deuxième piste négative.

Grâce à l'invention on peut diminuer le nombre de sorties du sélecteur, le nombre de curseurs porté par le deuxième chariot et le nombre de contacts.

La fabrication du sélecteur est également simplifiée ce qui permet pour une même main-d'oeuvre d'accroître la productivité.

En effet chaque piste de sélection, chaque piste de commande et la piste centrale sont reliées chacune à une sortie du sélecteur. Il en est de même des deux pistes négatives, en sorte que le sélecteur comporte six sorties au lieu de sept. Le faisceau comporte donc six fils. Bien entendu une sortie optionnelle supplémentaire peut être prévue aisément pour la fonction rabattement.

Il y a également un curseur de moins ce qui simplifie le deuxième chariot et réduit le nombre de contact.

On notera que l'étagement des pistes est facile à réaliser et contribue à la réduction du nombre de curseurs.

La plage de contact permanent est reliée à une piste de distribution. Cette plage de distribution est de forme rectangulaire et est en contact permanent avec l'un des curseurs du deuxième chariot. Sa surface est déterminée par le déplacement horizontal et vertical de ce chariot. Avec ce curseur on établit à volonté un contact avec cette piste de distribution et la piste centrale ou la première piste négative. Ce curseur permet donc d'alimenter positivement ou négativement la piste de contact permanent via la piste de distribution. On peut réaliser ainsi une commutation. Avec le deuxième curseur on peut, attendu que les deux curseurs sont couplés, sélectivement alimentés de manière négative ou positive l'une des deux pistes de commande.

Une de ces pistes de commande est, dans une forme de réalisation, en deux plages disposées horizontalement de part et d'autre d'une plage de l'autre piste de commande globalement en forme de U.

A chaque curseur du deuxième chariot est associé un réseau de plages en forme de croix.

La description qui va suivre illustre l'invention en regard des dessins annexés dans lesquels :
- la figure 1 est une vue en coupe axiale selon la ligne 1-1 de la figure 2 d'un sélecteur appartenant à la commande de réglage des rétroviseurs du véhicule automobile selon l'invention ;
- la figure 2 est une vue selon la flèche 2 de la figure 1 sans le couvercle de fermeture du boîtier, sans la platine et sans le deuxième chariot ;
- la figure 3 est une vue selon la flèche 3 de la figure 1 ;
- la figure 4 est une vue montrant le schéma électrique de la commande selon l'invention.

Ainsi qu'on le sait la commande de réglage des rétroviseurs d'un véhicule automobile comporte un sélecteur 20 relié par un faisceau de fils, d'une part, à la borne positive et à la borne négative de la batterie du véhicule et, d'autre part, à des moteurs électriques 40 à 43 de réglage des rétroviseurs agissant sur ceux-ci à l'aide de moyens de transmission.

Deux moteurs électriques sont prévus par rétroviseur pour régler le champ de vision de ceux-ci.

L'occupant du véhicule (le conducteur ou le passager) peut, à partir du sélecteur 20, sélectionner, à l'aide d'un premier chariot rotatif 21 portant des premiers curseurs 61 coopérant avec un premier réseau de pistes électriques 22, le rétroviseur droit (côté passager) ou gauche (côté conducteur) à régler et ce de manière indépendante.

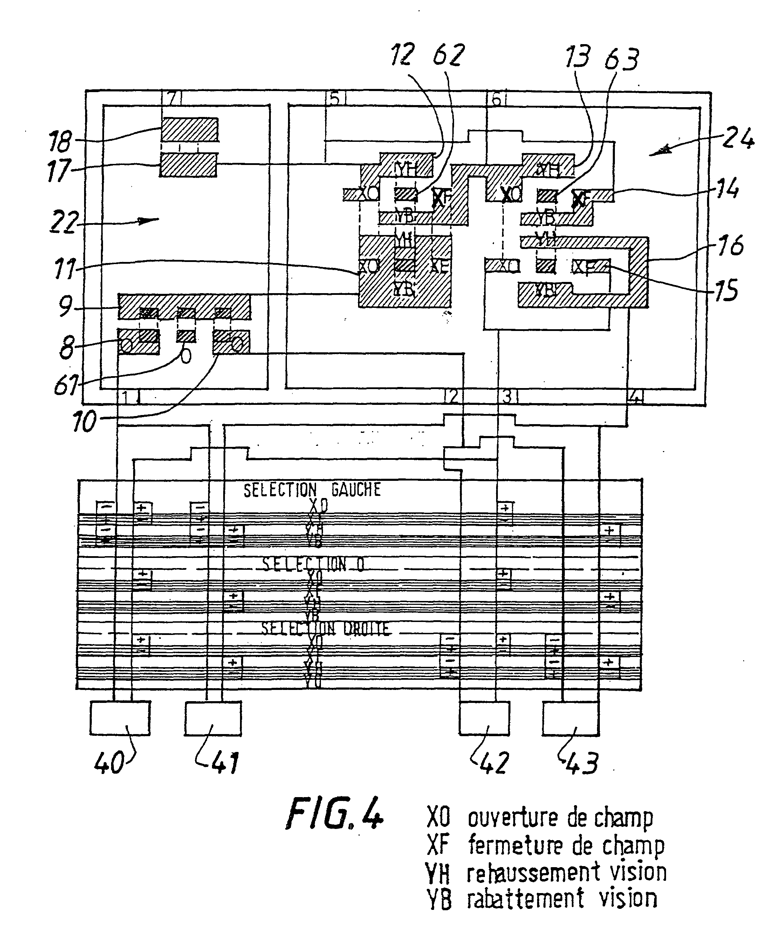

Pour chaque rétroviseur sélectionné, l'occupant du véhicule peut, à partir du sélecteur 20, piloter le moteur ou les moteurs électriques concernés à l'aide d'un deuxième chariot 23 portant des deuxièmes curseurs 62,63 (figure 4) coopérant avec un deuxième réseau de pistes électriques 24, pour ouvrir ou fermer le champ de vision et/ou rehausser ou rabattre ledit champ de vision.

Le deuxième chariot 23 est pour ce faire animé de mouvements de translation horizontalement et verticalement.

Le faisceau de fils doit donc comporter un nombre de fils déterminé.

L'invention propose de supprimer un fil du faisceau, de réduire le nombre de contacts, et de simplifier la production.

Ainsi chaque chariot 21,23 porte économiquement deux curseurs électriquement conducteur, ici métalliques,. Ces curseurs 61 à 63 sont du type standard.

Chaque curseur a une forme de U dont les branches sont engagées chacune à coulissement dans un logement pratique à cet effet centralement dans le chariot 21,23 concerné. Les curseurs 61 à 63 sont soumis à l'action d'un ressort monté dans un logement borgne du chariot concerné. Chaque ressort agit entre le fond du logement borgne et la partie médiane du fond du U du curseur.

C'est par l'intermédiaire de son fond que chaque curseur est admis à coopérer, sous l'action de son ressort associé, avec les pistes électriques respectivement du premier 22 ou du second 24 réseau de pistes électrique. Pour chaque position du curseur on établit, de manière connue, un circuit électrique permettant de réaliser la fonction de réglage désirée.

Les fonds des curseurs sont bombés à chacune de leur extrémité pour contact local avec le réseau 22,24 concerné.

Ces réseaux 22,24 appartiennent à des circuits imprimés, en variante découpés, portés par une platine 25 de contact et de distribution à double faces.

Le premier réseau 22 est monté sur la face supérieure de la platine; tandis que le second réseau 24 est monté sur la face inférieure de la platine 25, sachant que les chariots 21,23 sont disposés de part et d'autre de la platine 25 et que les réseaux 22,24 communiquent entre eux (figure 4).

Ces chariots 21,23 sont manoeuvrés à l'aide d'une manette rotative et basculante 26.

Les chariots 21,23, la platine 25 avec les réseaux 22,24 et en majeure partie la manette 26 sont montés à l'intérieur d'un boîtier 27 fixe en deux parties creuses à savoir une partie supérieur 28, dit corps externe, fermée par une partie inférieure 29, dit couvercle. Cette fermeture est réalisée ici par encliquetage, le couvercle 29 présentant des crans s'engageant dans des ouvertures que présente le corps externe 28 à son extrémité libre ou vice-versa. Ce corps externe présente une jupe d'orientation axiale, dotée à l'une de ses extrémités desdites ouvertures, et à son autre extrémité cette jupe se raccorde à une paroi sommitale 30 fermant le corps externe 28 et présentant centralement une portion tronconique 31 traversée par la partie supérieure de la manette 26 s'étendant en majeure partie à l'intérieur du boîtier 27.

A l'extérieur du boîtier 27, la partie supérieure de la manette 26 est solidaire d'un bouton de préhension moleté 32, avec interposition d'une rondelle élastique galbée 33 entre le bouton 32 et la portion tronconique 31. C'est sur ce bouton qu'agit l'occupant.

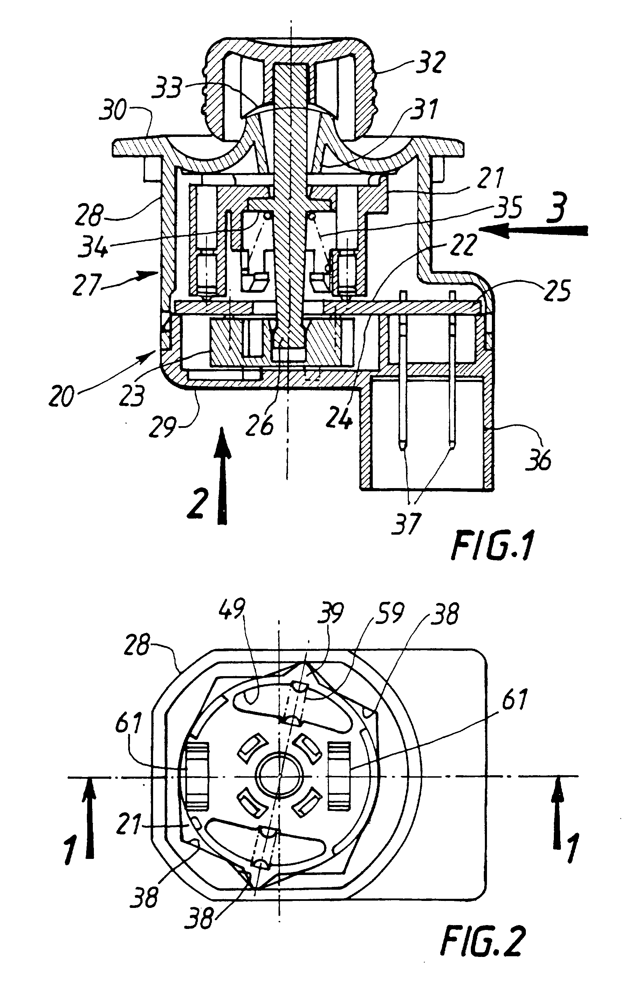

La manette 26 traverse à jeu la platine 25 et les réseaux 22,24 à la faveur d'une ouverture (figure 1) formée dans ladite platine.

La manette 26 traverse à jeu le premier chariot 21 et présente à son extrémité inférieure une tête munie latéralement d'un profil en arc de cercle pour rotuler à l'intérieur d'un alésage interne que présente centralement le deuxième chariot 23. La tête de la manette 26 constitue donc une rotule permettant d'entraîner en translation, dans deux directions perpendiculaires entre elles, le deuxième chariot 23.

Pour cela de manière connue, le couvercle 29 présente un fond muni de quatre creusures en forme de croix, dans lesquelles s'engagent à translation des tétons portés en saillie par la face inférieure du chariot 23, à savoir un téton par croix.

Deux des croix ont leur partie horizontale alignée, tandis que les deux autres croix ont leur partie verticale alignée. Les croix guident les tétons.

Ainsi à l'aide du bouton moleté 32, et grâce à !a portion tronconique 31 et à l'ouverture de la platine 25, l'occupant du véhicule peut faire basculer la manette 26, d'une part, dans un plan vertical - de bas en haut - pour déplacer le deuxième chariot 23 verticalement et, d'autre part, dans un plan horizontal - de droite à gauche - pour déplacer horizontalement le deuxième chariot 23.

Ainsi à partir d'une position moyenne définie par le centre des croix des creusures précitées, en déplaçant à l'aide du bouton 32 et donc la manette 26 vers la gauche on ouvre le champ de vision (repère X0 à la figure 4), tandis que lorsque l'on déplace la manette 26 vers la droite on ferme le champ de vision (repère XF à la figure 4).

En déplaçant la manette 26, toujours à l'aide du bouton 32 vers le haut on rehausse la vision (repère YH à la figure 4), tandis que lorsque l'on déplace la manette 26 vers le bas on rabat le champ de vision (repère YB à la figure 4).

Tout ceci est réalisé grâce aux moteurs électriques 40 à 43 alimentés électriquement en conséquence. Les deux moteurs électriques 40 et 41 sont associés au rétroviseur de gauche et les deux moteurs électriques 42 et 43 au rétroviseur de droite.

Un déplacement horizontal du deuxième chariot 23 permet de mettre en service (d'alimenter électriquement) le moteur 40 ou 42, tandis qu'un déplacement vertical du deuxième chariot 23 permet de mettre en service le moteur 41 ou 43.

Pour ce faire il faut effectuer une sélection entre la commande du rétroviseur de gauche ou de droite. Ceci est réalisé à l'aide du premier chariot rotatif 21.

A cet effet la manette 26 présente, au voisinage de la portion tronconique 31, une collerette 34 sur la face supérieure de laquelle s'appuie le premier chariot 21, ici globalement en forme de tambour et centralement creux à cet effet.

Ce chariot 21 est lié en rotation par coopération de formes avec la collerette 34. Celle-ci présente ici un contour non circulaire, tandis que le premier chariot 21 présente un contre-contour complémentaire.

Ainsi en faisant tourner le bouton 32, on entraîne en rotation le premier chariot pour effectuer une sélection afin de sélectionner le rétroviseur à régler (gauche ou droit).

Le bouton 32 peut donc occuper par rotation trois positions, à savoir une position de repos (sélection 0), dans laquelle aucun circuit électrique n'est établi, une première position pour commander le réglage du rétroviseur gauche (sélection gauche - figure 4) et établir des circuits électriques alimentant les moteurs 40 ou 41 en faisant basculer la manette 26, et une deuxième position pour commander le rétroviseur droit (sélection droite - figure 4) et établir des circuits électriques alimentant les moteurs 42 ou 43, tout ceci en faisant basculer la manette 26.

La face supérieure de la collerette 34 porte le premier chariot 21, qui présente pour ce faire (figure 1) des pattes (non référencées) à extrémité libre épaulée s'étendant en-dessous de la collerette 34. Un ressort 35 de forme tronconique s'appuie par son extrémité la plus large sur les épaulements des pattes, ici au nombre de quatre, et par son extrémité la moins large sur la face inférieure de la collerette 34 pour solliciter le chariot 21 en direction de la face supérieure de la collerette 34.

Pour ce faire le premier chariot 23 est avantageusement en matière plastique moulable et électriquement isolante.

Le boîtier 27 et le deuxième chariot 23 sont également en matière plastique moulable et électriquement isolante.

Tout ceci permet d'obtenir aisément les formes désirées. Ainsi (figure 2) le premier chariot 21 présente centralement des ouvertures pour le démoulage des pattes épaulées précitées.

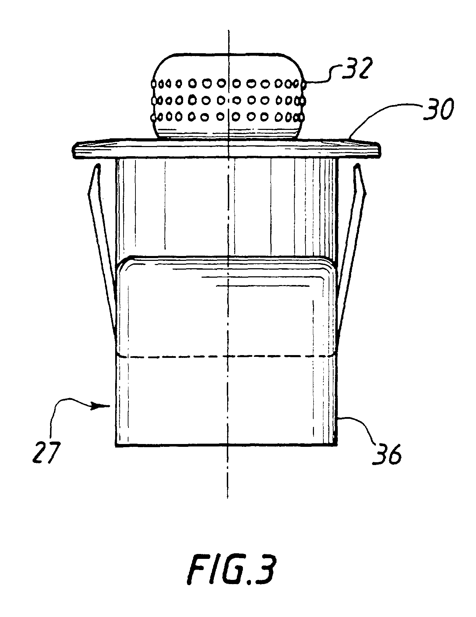

Le boîtier 27 présente, venues de moulage à l'extérieur, des languettes inclinées (figure 3) pour sa fixation par encliquetage sur une partie fixe du véhicule. Ces languettes sont réalisées ici sur le corps externe 28.

En variante des oreilles trouées sont réalisées sur le boîtier 27 pour fixation de celui-ci par vissage sur la partie fixe du véhicule.

Le couvercle 29 présente, venue de moulage, une protubérance de connexion 36 servant à recevoir des lames 37, électriquement conductrices, ici métalliques, solidaires de la platine 25 et reliées électriquement au premier 22 ou au deuxième 24 réseau de pistes électriques. Ces lames 37 sont décalées axialement par rapport aux chariots 21,23.

Le couvercle 29 présente également des nervures et des saillies pour support et fixation par emboîtement de la platine 25 ainsi fixée au couvercle 29.

La jupe du corps externe 28 présente, suivant une caractéristique, des empreintes 38 de forme triangulaire pour réception de deux saillies 39, ici de forme triangulaire, ménagées périphériquement sur le premier chariot 21 en forme de tambour. Les saillies 39 sont dirigées vers l'extérieur par rapport à la périphérie externe du chariot 21. Ces saillies 39 sont diamétralement opposées et appartiennent chacun à une bande de matière circulaire et souple (non référencée) délimitée chacune intérieurement par une ouverture 49 en forme de quartier d'orange (figure 2).

Six empreintes 38 sont ici prévues, à savoir trois paire d'empreintes diamétralement opposées. Grâce aux empreintes 38, aux saillies 39 et aux ouvertures 49 il est formé ainsi de manière simple un dispositif d'indexation permettant de maintenir le bouton 38 dans l'une de ses trois positions de sélection précitées.

Ici les bords circonférentiels des ouvertures 49 présentent en vis-à-vis centralement chacun un téton (non référencé) pour montage d'un ressort 59 sollicitant les saillies 39 en contact de l'une des empreintes 38.

Le ressort 59 est d'orientation radiale en étant monté centralement dans l'ouverture 49.

Il faut donc effectuer un effort déterminé pour tourner le bouton 32 et changer de position de sélection. Ceci permet de rendre la position de sélection insensible aux vibrations.

Bien entendu le bouton 32 peut occuper une position supplémentaire pour commander sur certains véhicules le rabattement (l'escamotage du rétroviseur).

Cela est facile à réaliser car il suffit de prévoir deux empreintes 38 supplémentaires, diamétralement opposées et disposées à 180° par rapport aux empreintes de la position de repos 0.

Les curseurs du premier chariot 21 ne réalisent donc pas une fonction d'indexage, ce qui est avantageux car les curseurs sont moins sensibles aux phénomènes de vibration, compte tenu de la présence des empreintes 38 et des saillies 39.

En outre on maîtrise mieux le serrage de l'indexation, et la platine 25 est ménagée et simplifiée.

Bien entendu la face supérieure du premier chariot 21 comporte des nervures (figure 2) non référencées pour contact local avec la paroi sommitale 30 du boîtier 27.

Cette paroi 30 est circulairement bombée en direction du couvercle 29 pour permettre à l'occupant de bien saisir par ses doigts le bouton moleté 32.

A la figure 4, pour plus de clarté, on a développé dans le même plan les réseaux 22,24 et représenté de manière schématique, d'une part, en 61 l'un des curseurs rotatifs porté par le premier chariot rotatif 21, et, d'autre part, en 62 et 63 les curseurs portés par le deuxième chariot 23 à mouvements de translation.

Les pistes électriques 8,9,10 du premier réseau 22 sont de forme circulaire et sont représentées ici de manière linéaire.

On voit que les réseaux 22,24 comportent sept sorties 1 à 7 reliées chacune à une lame 37.

Les sorties 1 à 4 sont reliées chacun à l'une des bornes d'alimentation électrique de l'un des moteurs électriques 40 à 43 d'actionnement des rétroviseurs, la sortie 5, dite sortie négative, est destinée à être reliée à la borne négative de la source de tension (la batterie du véhicule), tandis que la sortie 6, dite sortie positive, est destinée à être reliée à la borne positive de la source de tension. Il y a une septième sortie 7 car le rétroviseur peut être escamotable sur certains modèles de véhicule.

La piste 8 est reliée à la sortie 1, elle-même reliée à une borne d'alimentation du moteur 40 et à une borne d'alimentation du moteur 41.

La piste 10 est reliée à la sortie 2, elle-même reliée à une borne d'alimentation du moteur 42 et à une borne d'alimentation du moteur 43.

La sortie 3 est reliée à l'autre borne d'alimentation du moteur 42 et à l'autre borne d'alimentation du moteur 40, tandis que la sortie 4 est reliée à l'autre borne d'alimentation du moteur 43 et à l'autre borne d'alimentation du moteur 41.

Ainsi les pistes 8 et 10 sont des pistes de sélection et la piste 9 une piste de contact permanent, car les curseurs 61 sont en contact permanent avec la piste 9 et sélectivement avec les pistes 8 et 10 de part et d'autre d'une position 0, dite de repos, pour laquelle la piste 9 n'est reliée à aucune piste de sélection et/ou aucun circuit électrique n'est établi.

Grâce aux curseurs 61 et aux pistes de sélection 8,10, on peut alimenter sélectivement les moteurs électriques 40,41 du rétroviseur gauche ou les moteurs électriques 42,43 du rétroviseur droit en sorte que les sorties 1,2 sont des sorties de sélection.

La piste 9, dite première piste de contact permanent, est reliée à une piste 11 de distribution du deuxième réseau 24, qui comporte également trois pistes d'alimentation électrique 12,13,14 et les deux pistes de commande 15,16 reliées aux sorties de commande 3,4. Les pistes 15 et 16 sont des pistes de commande de l'un des deux moteurs 40,41, ou 42,43 du rétroviseur sélectionné à régler.

Il est également prévu deux pistes optionnelles 17 et 18 sur le premier réseau 22 pour la fonction rabattement (escamotage) des rétroviseurs. Ces pistes 17,18 sont susceptibles d'être reliées entre elles par les curseurs 61 du premier chariot. La piste 18 est reliée à la sortie optionnelle 7 et la piste 17 elle-même reliée à la piste d'alimentation 12 ici négative car elle est reliée à la sortie négative 5 (borne négative de la batterie).

La piste 14 est également une piste d'alimentation négative reliée à la sortie 5, tandis que la piste 13, dite piste d'alimentation centrale car commune aux deux curseurs 62,63, est une piste d'alimentation positive reliée à la sortie positive 6 (borne positive de la batterie). Les pistes 15 et 16 sont des pistes de commande et de sortie car elles sont reliées respectivement aux sorties 3 et 4.

On notera que la piste de sortie 15 est fractionnée en deux plages disposées de part et d'autre d'une extrémité de la piste 16 globalement en forme de U.

La piste 15 permet de commander l'ouverture et la fermeture du champ de vision et c'est la raison pour laquelle elle comporte une première plage X0 correspondant à l'ouverture du champ de vision et une seconde plage XF correspondant à la fermeture du champ de vision.

La piste 16 permet de commander le rehaussement et le rabattement du champ de vision et présente une première branche YH correspondant à un rehaussement du champ de vision et une deuxième branche YB, à extrémité épaissie, disposée entre les plages de la piste 15 en-dessous de celles-ci, correspondant à un rabattement du champ de vision. Les branches forment des plages pour la piste 16. La piste 14 est décalée partiellement horizontalement et verticalement par rapport à la piste 12 en considérant la figure 4. Cette piste 14 est étagée et comportent deux plages correspondant aux fonctions YB et XF précitées. De même la piste 12 est étagée et comporte deux plages correspondants aux fonctions XO, YH. La piste 12 est associée au curseur 62 et la piste 14 au curseur 63.

La piste centrale 13 comporte quatre plages à savoir deux plages de fonction YB, XF associées au curseur 62 et complémentaires à celles de la piste 12, et deux plages de fonction XO, YH associées au curseur 63 et complémentaires à celles de la piste 14.

La piste de distribution 11 est une piste de contact permanent avec le curseur 62 et est de forme rectangulaire pour réaliser les quatre fonctions X0,YH,XF,YB et centralement la fonction de repos. Elle forme donc une plage de grande étendue.

La piste 13 s'étend entre les deux pistes 11,12 par l'intermédiaire de ses deux premières plages associées aux fonctions YB, XF. La piste 13 est associée aux deux curseurs 62,63.

C'est grâce à cette piste centrale 13 et aux agencements précités que l'on peut économiser un fil. Cette piste 13 est intercalée, suivant l'invention, en considérant la figure 4, verticalement entre les pistes 12,11 et horizontalement entre les deux pistes 12,14 et ce verticalement au-dessus des pistes 15,16, sachant que la piste 15 s'étend par l'une XF de ses plages à l'intérieur du U de la piste 16 - c'est-à-dire entre ses branches - et par l'autre de ses plages globalement horizontalement au-delà des extrémités libres des branches de la piste 16.

Pour plus de précisions sur la forme des pistes on se reportera à la figure 4.

A la figure 4, on n'a représenté en foncé les zones locales de contact des curseurs 61 à 63, ces zones correspondants aux extrémités bombées des curseurs.

Ainsi, à l'aide de la manette 26, en déplaçant verticalement le deuxième chariot 23 et donc les curseurs 62,63, on établit des circuits électriques sachant qu'à la figure 4 on se trouve dans la position neutre ou de repos (position 0) dans laquelle aucun circuit n'est établi.

Plus précisément, en déplaçant les curseurs 62,63 verticalement vers le haut on relie la piste 9 à la sortie négative 5 en établissant à l'aide du curseur 62 une liaison électrique entre les plages de fonction YH (rehaussement du champ de vision) des pistes 12 et 11.

Simultanément on établit, à l'aide du curseur 63, une liaison électrique entre les plages de fonction YH des pistes 13 et 16. La sortie 4 est donc reliée à la sortie positive 6 tandis que la sortie 3 n'est pas alimentée. En tournant le bouton 32 on déplace les curseurs 61 pour établir une liaison soit entre les pistes 9 et 8, soit entre les pistes 9 et 10.

Ainsi on peut alimenter dans un sens de rotation sélectivement les moteurs électriques 41 et 43 respectivement du rétroviseur gauche et droit.

Pour inverser le sens de rotation de ces moteurs, il suffit de déplacer verticalement vers le bas les curseurs 62,63 pour établir à l'aide de ceux-ci une liaison électrique entre les plages de fonction YB (rabattement du champ de vision) des pistes respectivement 13,11 et 14,16. La piste 9 est alors reliée à la sortie positive 6 et la piste 16 à la sortie négative 5.

En déplaçant les curseurs 62,63 horizontalement on alimente la sortie 3 tandis que la sortie 4 n'est pas alimentée.

On peut donc à laide du curseur 61 alimenter soit le moteur 40 du rétroviseur gauche soit le moteur 41 du rétroviseur droit.

En déplaçant les curseurs 62,63 vers la droite on établit des liaisons électriques entre les plages de fonction X0 (ouverture du champ de vision) respectivement des pistes 12-11 et 13-15.

La piste 9 est donc reliée à la sortie négative 5 et la sortie 3 à la sortie positive 6.

En déplaçant les curseurs 62,63 vers la gauche, on inverse le sens de rotation des moteurs 40,42 en fonction de la sélection voulue. Dans ce cas, à l'aide des curseurs 62,63 on établit une liaison électrique entre les plages de fonction XF (fermeture du champ de vision) respectivement des pistes 13 et 11, 14 et 15.

La fonction supplémentaire de rabattement (escamotage des rétroviseurs) est réalisée aisément à l'aide d'au moins l'un des curseurs 61 à 180° par rapport à la position 0 du curseur 61.

Ainsi qu'il ressort à l'évidence de la description et des dessins, les pistes 12 à 14 sont des pistes d'alimentation respectivement négative pour les pistes 12 et 14 et positive pour la piste 13, intercalée entre les pistes 12 et 14.

Les pistes 12 et 14 ont des plages respectivement X0 et XF décalées horizontalement respectivement vers la gauche et vers la droite par rapport à la piste centrale 13 d'alimentation positive. Les plages XF et X0 des pistes 12,14, d'une part, et de la piste 13 sont horizontalement alignées en étant associées par paires.

Les plages YH des pistes 12 et 13 sont horizontalement alignées et décalées verticalement par rapport aux plages YH des pistes 13,14 alignées horizontalement pour réaliser les commutations désirées.

Le centre de la piste 11 de distribution correspond à une position de repos et est aligné horizontalement avec les plages X0, XF des pistes 11 et 15.

Les plages YH des pistes 11 et 16 sont alignées horizontalement et il en est de même des plages YB desdites pistes décalées verticalement par rapport aux plages YH.

A l'aide des pistes à chaque curseur 62,63 est associé un réseau de plages en forme de croix avec une position centrale sans établissement de liaison électrique.

La piste centrale 13 comporte verticalement trois étages de plages YB-XF,XO-YH c'est-à-dire un étage de plus que les pistes 12,14 présentant des plages X0 et XF alignées horizontalement.

Deux plages YH des pistes 12 et 13 sont donc verticalement au même niveau et horizontalement alignées.

Deux plages YB des pistes 14 et 134 sont donc verticalement au même niveau et horizontalement alignées.

L'ensemble des pistes 12 et 14 comporte donc verticalement trois étages.

Bien entendu on peut retourner la figure 4 à 180°, les plages du bas se retrouvant alors en haut et vice versa.

## Revendications

1. Sélecteur de réglage de rétroviseur de véhicule automobile destiné à régler des premier et second rétroviseurs auxquels sont associés respectivement des première et seconde paires de moteurs électriques de réglage de rétroviseurs, du type comprenant des moyens de sélection d'une paire de moteurs destinés à être alimentés électriquement, dite paire sélectionnée de premier (40, 42) et second (41, 43) moteurs de réglage, et des premier (62) et second (63) curseurs conducteurs mobiles destinés à coopérer avec un premier réseau (24) de pistes conductrices pour établir des circuits d'alimentation électrique de la paire sélectionnée de moteurs,
chaque moteur de réglage (40 à 43) étant muni de première et seconde bornes d'alimentation électrique destinées à être portées respectivement à des polarités opposées,
le premier curseur (62) étant destiné à raccorder sélectivement une piste d'alimentation électrique, dite première piste (12), et une autre piste d'alimentation électrique, dite piste centrale (13), destinées à être portées respectivement à des polarités opposées, avec une piste de distribution (11), destinée à être raccordée à la première borne de chaque moteur de réglage (40 à 43),
le second curseur (63) étant destiné à raccorder la piste centrale (13) et une autre piste d'alimentation électrique, dite seconde piste (14), destinées à être portées respectivement à des polarités opposées, à des première (15) et seconde (16) pistes de commande sélectivement, destinées à être raccordées à la seconde borne d'alimentation des premier (40, 42) et second (41, 43) moteurs de réglage respectivement,
la piste centrale (13) étant intercalée entre les première (12) et seconde (14) pistes,
les deux curseurs (62, 63) étant couplés entre eux de façon à être déplaçables conjointement entre une position de repos et au moins une position active d'alimentation électrique d'au moins un moteur de réglage (40 à 43) dans laquelle le premier curseur (62) est en contact avec la piste de distribution (11), le second curseur (63) est en contact avec l'une des pistes de commande (15, 16), et les deux curseurs (62, 63) sont en contact respectivement avec des pistes d'alimentation électrique (12 à 14) de polarités opposées,
**caractérisé en ce que** les moyens de sélection comprennent des troisièmes curseurs (61) destinés à coopérer avec un second réseau (22) de pistes conductrices pour relier électriquement la piste de distribution (11), à la première borne de chaque moteur de réglage (40 à 43) de la paire sélectionnée.

2. Sélecteur selon la revendication 1, **caractérisé en ce que** les deux curseurs (62, 63) sont déplaçables conjointement suivant une première direction, dite horizontale, et une seconde direction, dite verticale, perpendiculaire à la première direction de façon à définir, pour chaque curseur (62,63), quatre positions actives disposées en croix centrée sur la position de repos.

3. Sélecteur selon la revendication 2, **caractérisé**
**en ce que** les deux pistes d'alimentation électrique (12, 13) associées au premier curseur (62) comprennent des premières plages (YH, YB) de contact sélectif avec le premier curseur (62) décalées verticalement entre elles, dites premières plages verticales,
et **en ce que** les deux pistes d'alimentation électrique (13, 14) associées au second curseur (63) comprennent des secondes plages (YH, YB) de contact sélectif avec le second curseur (64) alignées verticalement entre elles, dites secondes plages verticales, de façon que leurs polarités se succèdent verticalement dans un sens opposé à celui des polarités des premières plages verticales.

4. Sélecteur selon la revendication 2 ou 3, **caractérisé**
**en ce que** les deux pistes d'alimentation électrique (12, 13) associées au premier curseur (62) comprennent des premières plages de contact sélectif avec le premier curseur (62) alignées horizontalement entre elles, dites premières plages horizontales (X0, XF),
et **en ce que** les deux pistes d'alimentation électrique (13, 14) associées au second curseur (63) comprennent des secondes plages de contact sélectif avec le second curseur (64) alignées horizontalement entre elles, dites secondes plages horizontales (X0,XF), des première et seconde plages horizontales de polarités identiques étant intercalées horizontalement entre des première et seconde plages horizontales de polarités opposées.

5. Sélecteur selon l'une quelconque des revendications 2 à 4, **caractérisé**
**en ce que** la première piste de commande (15) comprend deux plages (X0, XF) de contact sélectif avec le second curseur (64),
et **en ce que** la seconde piste de commande (16) comprend deux plages (YB, YH) de contact sélectif avec le second curseur (64), les plages (X0, XF) de la première piste de commande (15) étant disposées horizontalement de part et d'autre des plages (YB, YH) de la seconde piste de commande (16).

6. Sélecteur selon l'une quelconque des revendications précédentes, **caractérisé en ce que** la piste de distribution (11 ) est en contact permanent avec le premier curseur (62).

7. Sélecteur selon l'une quelconque des revendications précédentes, **caractérisé en ce qu'**il comprend un premier chariot (21), portant les troisièmes curseurs (61), et un second chariot (23), portant les premier (62) et second (63) curseurs.

8. Sélecteur selon l'une quelconque des revendications précédentes, **caractérisé en ce qu'**il comporte un corps externe (28) avec une jupe dotée d'empreintes (38) pour la réception de saillies (39) portées périphériquement par le premier chariot (21).

9. Sélecteur selon la revendication 8, **caractérisé en ce que** les saillies (39) appartiennent à une bande de matière circulaire et souple délimitée chacune intérieurement par une ouverture (49).

10. Sélecteur selon la revendication 9, **caractérisé en ce que** l'ouverture (49) est en forme de quartier d'orange et **en ce qu'**un ressort (59) d'orientation radiale est monté centralement dans l'ouverture.

## Patentansprüche

1. Auswahlvorrichtung zum Einstellen eines Kraftfahrzeugrückspiegels, die zum Einstellen eines ersten und zweiten Rückspiegels ausgelegt ist, mit denen jeweils ein erstes und ein zweites Paar Elektromotoren zum Einstellen der Rückspiegel verbunden sind, und deren Bauart eine Einrichtung zum Auswählen eines Paars elektrisch zu versorgende Motoren, das von einem ersten (40, 42) und zweiten (41, 43) Einstellmotor ausgewählt ist, und einen ersten (62) und zweiten (63) beweglichen Leitschieber umfaßt, der mit einem ersten Netz (24) von Leiterbahnen zusammenwirken kann, um elektrische Versorgungskreise für das ausgewählte Paar Motoren vorzusehen,
wobei jeder Einstellmotor (40 bis 43) einen ersten und einen zweiten Anschluß für eine elektrische Versorgung aufweist, welche Anschlüsse bezüglich entgegengesetzter Polaritäten tragbar sind,
wobei der erste Schieber (62) selektiv eine elektrische Versorgungsbahn, nämlich eine erste Bahn (12), und eine weitere elektrische Versorgungsbahn, nämlich eine zentrale Bahn (13), welche Bahnen bezüglich entgegengesetzter Polaritäten tragbar sind, an eine Verteilungsbahn (11) anschließen kann, die mit dem ersten Anschluß jedes Einstellmotors (40 bis 43) verbindbar ist,
wobei der zweite Schieber (63) die zentrale Bahn (13) und eine weitere elektrische Versorgungsbahn, nämlich eine zweite Bahn (14), welche Bahnen bezüglich entgegengesetzter Polaritäten tragbar sind, selektiv an eine erste (15) und zweite (16) Steuerungsbahn anschließen kann, welche Steuerungsbahnen mit dem zweiten Versorgungsanschluß des ersten (40, 42) bzw. zweiten (41,43) Einstellmotor anschließbar sind,
wobei die zentrale Bahn (13) zwischen der ersten (12) und der zweiten (14) Bahn eingebracht ist,
wobei die beiden Schieber (62, 63) miteinander derart gekoppelt sind, daß sie zusammen zwischen einer Ruhestellung und wenigstens einer aktiven Stellung für eine elektrische Versorgung mindestens eines Einstellmotors (40 bis 43) verlagerbar sind, in welcher der erste Schieber (62) die Verteilungsbahn (11) berührt, der zweite Schieber (63) eine der Steuerbahnen (15, 16) berührt und die beiden Schieber (62, 63) die jeweilige elektrische Versorgungsbahn (12 bis 14) entgegengesetzter Polaritäten berühren,
**dadurch gekennzeichnet, daß** die Auswahleinrichtung dritte Schieber (61) umfaßt, die mit einem zweiten Netz (22) Leiterbahnen zusammenwirken können, um die Verteilungsbahn (11) mit dem ersten Anschluß jedes Einzelstellmotors (40 bis 43) des ausgewählten Paars elektrisch zu verbinden.

2. Auswahlvorrichtung nach Anspruch 1, **dadurch gekennzeichnet, daß** die beiden Schieber (62, 63) gemäß einer ersten Richtung, nämlich einer horizontalen Richtung, und einer zweiten Richtung, nämlich einer vertikalen Richtung, die senkrecht zur ersten Richtung ist, derart zusammen verlagerbar sind, daß für jeden Schieber (62, 63) vier aktive Stellungen definiert werden, die zu einem Kreuz angeordnet sind, das an der Ruheposition zentriert ist.

3. Auswahlvorrichtung nach Anspruch 2, **dadurch gekennzeichnet, daß** die beiden elektrischen Versorgungsleitungen (12, 13), die mit dem ersten Schieber (62) verbunden sind, erste Bereiche (YH, YB) für einen selektiven Kontakt mit dem ersten Schieber (62) umfassen, welche Bereiche, nämlich die ersten vertikalen Bereiche, untereinander vertikal versetzt sind,
und daß die beiden elektrischen Versorgungsbahnen (13, 14), die mit dem zweiten Schieber (63) verbunden sind, zweite Bereiche (YH, YB) für einen selektiven Kontakt mit dem zweiten Schieber (64) umfassen, welche Bereiche, nämlich die zweiten vertikalen Bereiche, zueinander vertikal ausgerichtet sind, so daß deren Polaritäten vertikal in einer Richtung einander folgen, die der Richtung der Polaritäten der ersten vertikalen Bereiche entgegengesetzt ist.

4. Auswahlvorrichtung nach Anspruch 2 oder 3, **dadurch gekennzeichnet, daß** die beiden elektrischen Versorgungsbahnen (12, 13), die mit dem ersten Schieber (62) verbunden sind, erste Bereiche für einen selektiven Kontakt mit dem ersten Schieber (62) umfassen, welche Bereiche, nämlich erste horizontale Bereiche (X0, XF), zueinander horizontal ausgerichtet sind,
und daß die beiden elektrischen Versorgungsbahnen (13, 14), die mit dem zweiten Schieber (63) verbunden sind, zweite Bereiche für einen selektiven Kontakt mit dem zweiten Schieber (64) umfassen, welche Bereiche, nämlich die zweiten horizontalen Bereiche (X0, XF), zueinander horizontal ausgerichtet sind,
wobei der erste und zweite, horizontale Bereich identischer Polaritäten horizontal zwischen den ersten und zweiten horizontalen Bereich entgegengesetzter Polaritäten eingebracht sind.

5. Auswahlvorrichtung nach Anspruch 2 bis 4, **dadurch gekennzeichnet, daß** die erste Steuerbahn (15) zwei Bereiche (X0, XF) für einen selektiven Kontakt mit dem zweiten Schieber (64) umfaßt
und daß die zweite Steuerbahn (16) zwei Bereiche (YB, YH) für einen selektiven Kontakt mit dem zweiten Schieber (64) umfaßt, wobei einerseits die Bereiche (X0, XF) der ersten Steuerungsbahn (15) auf der einen und der anderen Seite der Bereiche (YB, YH) der zweiten Steuerungsbahn (16) horizontal angeordnet sind.

6. Auswahlvorrichtung nach einem der vorangegangenen Ansprüche, **dadurch gekennzeichnet, daß** die Verteilungsbahn (11) permanent den ersten Schieber (62) berührt.

7. Auswahlvorrichtung nach einem der vorangegangenen Ansprüche, **dadurch gekennzeichnet, daß** sie einen ersten Träger (21), der die dritten Schieber (61) trägt und einen zweiten Träger (23) umfaßt, der den ersten (62) und zweiten (63) Schieber trägt.

8. Auswahlvorrichtung nach einem der vorangegangenen Ansprüche, **dadurch gekennzeichnet, daß** sie einen externen Körper (28) mit einem Mantel, der mit Vertiefungen (38) versehen ist, um Vorsprünge (39) aufzunehmen, die am Umfang des ersten Trägers (21) getragen sind.

9. Auswahlvorrichtung nach Anspruch 8, **dadurch gekennzeichnet, daß** die Vorsprünge (39) einem kreisförmigen Rand aus einem weichen Material zugeordnet sind, der jeden Vorsprung innen durch eine Öffnung (49) begrenzt.

10. Auswahlvorrichtung nach Anspruch 8, **dadurch gekennzeichnet, daß** die Öffnung (49) ähnlich einem Orangenstück ausgebildet ist und daß eine radiale Ausrichtungsfeder zentral in der Öffnung eingebracht ist.

## Claims

1. A selector switch for adjusting motor vehicle rearview mirrors by adjusting first and second rearview mirrors associated with respective first and second pairs of rearview mirror adjustment electric motors, the switch being of the type comprising selector means for selecting one pair of motors to be powered electrically, referred to as the "selected" pair of first (40, 42) and second (41,43) adjustment motors and first and second sliding contacts (62, 63) for co-operating with a first pattern (24) of conductor tracks for establishing electrical power supply circuits to the selected pair of motors,
each adjustment motor (40 to 43) being provided with first and second electricity feed terminals for raising to respective opposite polarities,
the first sliding contact (62) being designed to connect a "first" electricity feed track (12), and a "central" electricity feed track (13) for raising respectively to opposite polarities selectively with a distribution track (11) for connection to the first terminal of each adjustment motor (40 to 43),
the second sliding contact (63) being designed to connect the central track (13) and a "second" electricity feed track (14) for raising respectively to opposite polarities to first and second control tracks (15, 16) selectively for connection to the second power supply terminals of the first (40, 42) and second (41, 43) adjustment motors respectively, the central track (13) being interposed between the first and second tracks (12, 14),
the sliding contacts (62, 63) being coupled to each other in such a manner as to be movable jointly between a rest position and at least one active position for feeding electricity to at least one adjustment motor (40 to 43) in which the first sliding contact (62) is in contact with the distribution track (11), the second sliding contact (63) is in contact with one of the control tracks (15, 16), and the two sliding contacts (62, 63) are in contact respectively with electricity feed tracks (12 to 14) of opposite polarities,
the selector switch being **characterized in that** the selector means include third sliding contacts (61) for co-operating with a second pattern (22) of conductor tracks for electrically connecting the distribution track (11) to the first terminal of each adjustment motor (40 to 43) of the selected pair.

2. A selector switch according to claim 1, **characterized in that** the two sliding contacts (62, 63) are displaceable jointly in a "horizontal" first direction and in a "vertical" second position perpendicular to the first direction so as to define for each sliding contact (62, 63) four active positions disposed in a cross centered on the rest position.

3. A selector switch according to claim 2, **characterized:**
**in that** the two electricity feed tracks (12, 13) associated with the first sliding contact (62) have first contact areas (YH, YB) for making contact selectively with the first sliding contact (62) that are vertically offset relative to each other, and that are referred to as first vertical areas; and
**in that** the two electricity feed tracks (13, 14) associated with the second sliding contact (63) have second contact areas (YH, YB) for making contact selectively with the second sliding contact (64), that are vertically aligned with each other, and that are referred to as second vertical areas, with their polarities following one another vertically in the opposite direction to that in which the polarities of the first vertical areas follow one another.

4. A selector switch according to claim 2 or claim 3, **characterized:**
**in that** the two electricity feed tracks (12, 13) associated with the first sliding contact (62) have first contact areas for making contact selectively with the first sliding contact (62), that are horizontally aligned with each other, and that are referred to as first horizontal areas (XO, XF); and
**in that** the two electricity feed tracks (13, 14) associated with the second sliding contact (63) have second contact areas for making contact selectively with the second sliding contact (64), that are horizontally aligned with each other, and that are referred to as second horizontal areas (XO, XF), first and second horizontal areas of identical polarities being interleaved horizontally between first and second horizontal areas of opposite polarities.

5. A selector switch according to any one of claims 2 to 4, **characterized:**
**in that** the first control track (15) comprises two contact areas (XO, XF) for making contact selectively with the second sliding contact (64); and
**in that** the second control track (16) comprises two contact areas (YB, YH) for making contact selectively the second sliding contact (64), the areas (XO, XF) of the first control track (15) being disposed horizontally on either side of the areas (YB, YH) of the second control track (16).

6. A selector switch according to any preceding claim, **characterized in that** the distribution track (11) is continuously in contact with the first sliding contact (62).

7. A selector switch according to any preceding claim, **characterized in that** it includes a first carriage (21) carrying the third sliding contacts (61), and a second carriage (23) carrying the first and second sliding contacts (62, 63).

8. A selector switch according to any preceding claim, **characterized in that** it includes an external body (28) having a skirt provided with recesses (38) for receiving projections (39) carried peripherally by the first carriage (21).

9. A selector switch according to claim 8, **characterized in that** each projection (39) belongs to a circular and flexible strip of material defined on its inside by an opening (49).

10. A selector switch according to claim 9, **characterized in that** the opening (49) is in the shape of a segment of an orange, and **in that** a radially-extending spring (59) is mounted centrally in the opening.
